# FASCICULE DE BREVET EUROPEEN

(11) **EP 0 933 317 B1**
(45) Date de publication et mention de la délivrance du brevet: **12.09.2001**
(21) Numéro de dépôt: 99400200.4
(22) Date de dépôt: 28.01.1999
(51) Int. Cl.: B65G 65/46

(54) **Extracteur à vis pour silos**
Schneckenextraktor für Silos.
Screw extractor for silos

(30) Priorité: 28.01.1998 FR 9800897
(43) Date de publication de la demande: 04.08.1999
(73) Titulaire: Starvrac S.A., 62690 Hermaville (FR)
(72) Inventeur: Ramboz, Maurice, 39100 Dole (FR)
(74) Mandataire: Wagret, Frédéric

(56) Documents cités:
- DE-A- 2 630 298
- FR-A- 2 041 074
- FR-A- 2 675 133

## Description

La présente invention concerne le domaine des extracteurs à vis pour silos ou équivalents, permettant l'évacuation des matières pulvérulentes ou granuleuses stockées à l'intérieur de ceux-ci, selon le préambule de la revendication 1.

Les produits stockés dans les silos ont tendance, au bout d'un certain temps de stockage, à s'agglomérer et former des talus subsistant après évacuation. Or ces talus sont sources de développement bactérien ou autre, susceptible de détériorer les nouveaux produits stockés à l'intérieur dudit silo avec lesquels ils sont en contact. De plus, le volume occupé par lesdits talus n'est plus disponible pour les stockages ultérieurs.

Il est connu du brevet FR 9104315 déposé par le présent demandeur, un dispositif du type extracteur à vis sans fin apte à réaliser l'évacuation totale des silos. L'extracteur est muni de deux vis sans fin parallèles l'une par rapport à l'autre, une vis principale d'extraction et une vis auxiliaire. Les vis sont animées d'un mouvement de rotation sur elles-mêmes autour de leur axe longitudinal et sont disposées près du fond du silo, radialement, de manière à extraire les matières reposant sur le fond du silo et à les transporter vers une ouverture d'évacuation; dans le cas présent, il s'agit d'une ouverture centrale de vidange gravitaire. Les vis sont par ailleurs déplacées en rotation autour d'un axe vertical central de manière à balayer, extraire et évacuer les matières résiduelles du fond du silo.

La vis principale est pourvue d'une paroi de déflexion entourant la partie arrière de la dite vis par rapport au sens de déplacement de celle-ci et permettant de guider les produits stockés vers l'ouverture d'évacuation centrale. Des moyens d'attaque des talus résiduels de grande taille sont prévus sous la forme d'une lame à bord dentelée surplombant la vis principale.

L'extracteur est disposé au repos à l'aplomb d'un système de démarrage de type connu. Après utilisation, l'extracteur doit revenir en position de repos, dite position de parking pour pouvoir redémarrer lors d'une utilisation ultérieure. La vis auxiliaire permet le déplacement de l'extracteur dans le sens inverse d'utilisation, de manière à ramener l'extracteur dans la position de parking, sans avoir à parcourir la totalité de la périphérie du silo. En effet, en l'absence d'une vis auxiliaire, la paroi de déflexion est susceptible de buter contre des amas de matières résultant de l'écroulement de talus résiduels lors du passage de la lame et bloquer l'extracteur en position. La vis auxiliaire permet également d'extraire et d'évacuer lesdits amas.

Cependant, les vis de l'extracteur requièrent chacune un moteur d'entraînement propre, un système de commande propre, une charge appliquée importante : il en résulte un coût de fabrication et d'exploitation élevé, un volume occupé important.

L'extracteur présente de plus une structure complexe, dont les éléments constitutifs essentiels sont difficiles d'accès et dont le nettoyage et la maintenance sont peu aisés.

Dans ce contexte, la présente invention propose un extracteur permettant de pallier à tous ces inconvénients et notamment de permettre une évacuation totale des silos, d'offrir toutes les fonctions et avantages de l'extracteur décrit ci-dessus tout en revêtant une forme simple, de fabrication et exploitation nettement moins onéreuses, et d'encombrement réduit.

A cet effet, la présente invention propose un extracteur destiné à l'évacuation de produits stockés dans un silo ou équivalent, comportant une vis sans fin apte à être entraînée en rotation sur elle-même et associée à deux plaques déflectrices dont l'une au moins est mobile, lesdites plaques guidant les produits (5) extraits vers une ouverture (12) d'évacuation, la vis étant susceptible de se déplacer parallèlement à la surface du fond (6) du silo autour d'un axe vertical selon les deux sens de rotation, caractérisé en ce que les deux plaques (14, 14') sont disposées de part et d'autre de la vis et en vis à vis, chaque plaque comportant au moins une portion fixe et une portion mobile formée d'un panneau sensiblement plan et articulé sur la portion fixe autour d'un axe colinéaire à la vis (2), entre une position ouverte libérant un passage aux produits, et une position fermée où la plaque guide lesdits produits vers l'ouverture d'évacuation.

La vis est pourvue d'un filet dont le bord périphérique extérieur est dentelé.

Le châssis contenant la vis est déplacé parallèlement à la surface du fond du silo au moyen d'un système de crémaillère fixée au sol et associée à une roue dentée montée sur le châssis.

Au moins une paire de galets ou équivalent associée(s) au châssis contenant la vis et répartie(s) de manière homogène sur toute sa longueur est prévu pour le déplacement de ce dernier.

Le châssis porteur comprend des membrures formant une structure triangulaire rigide de protection.

D'autres avantages et objets de l'invention apparaîtront à la lumière de la description qui suit, se rapportant à un exemple illustratif et non limitatif de réalisation en référence aux dessins annexés dans lesquels :
- les figures 1a à 1c représentent une vue en coupe respectivement de face, de côté, et de dessus de l'extracteur selon l'invention,
- la figure 2 représente une vue en coupe selon un plan transversal de l'extracteur selon la figure 1 en cours d'utilisation,
- la figure 3 représente une vue en coupe selon un plan transversal de l'extracteur selon la figure 1 de retour vers sa position de parking.

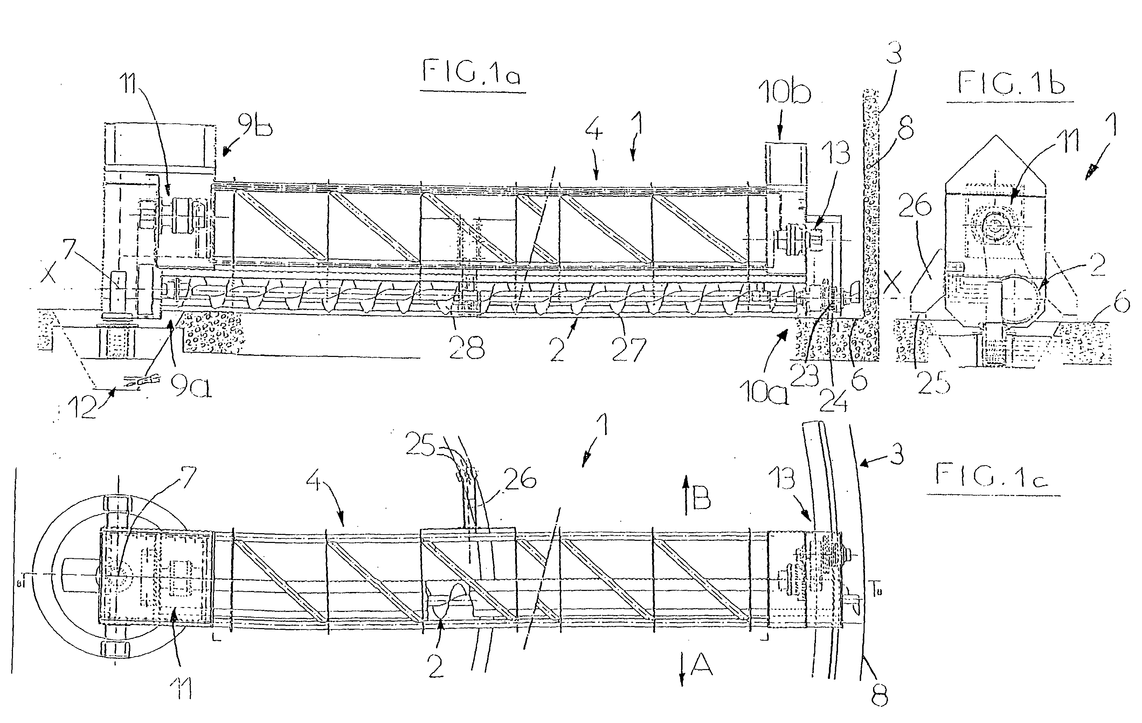

Comme représenté sur les figures 1 à 3, la présente invention concerne un extracteur 1 à vis 2 pour silos 3, destiné à l'évacuation totale de ces derniers.

Dans toute la description qui suit, l'invention est décrite dans le cas d'un silo 3 de forme cylindrique. Elle peut néanmoins être utilisée et adaptée à toute forme et tout type de silo ou équivalent.

L'extracteur 1 comprend un châssis 4 porteur ouvert de telle sorte qu'en position de parking, le châssis 4 soit rempli par des produits 5 stockés à l'intérieur du silo 3.

Le châssis 4 contient et supporte une vis 2 sans fin unique disposée parallèlement au fond 6 du silo 3. La vis 2 est maintenue selon un axe radial X-X (figure 1a) et s'étend du centre 7 (figure 1c) du fond 6 du silo 3 à sa paroi 8 périphérique. L'extrémité respectivement de la vis ou du châssis située au niveau du centre 7 est appelée ci-après extrémité respectivement 9a, 9b centrale et l'extrémité placée à proximité de la paroi 8, extrémité respectivement 10a, 10b périphérique.

La vis 2 est mise en rotation sur elle-même autour de son axe X-X longitudinal radial par un organe 11 de commande de rotation motorisé de type connu placé au centre 7 du fond 6 du silo, à l'intérieur du châssis 4 porteur.

Les produits 5 reposant au fond du silo sont entraînés par la rotation de la vis 2 sur elle-même vers une ouverture 12 de vidange au centre 7 du fond du silo dans laquelle ils s'écoulent par gravité (figure 1a).

La vis 2 est déplacée selon un mouvement rotatoire autour du centre 7 du silo à l'aide d'un organe 13 de commande de déplacement motorisé de type connu. L'organe 13 est intégré au châssis porteur au niveau de son extrémité 10b périphérique. Dans la forme de réalisation des figures 1 à 3, la flèche A indique le sens de déplacement de la vis 2 en cours d'utilisation et le flèche B le sens de déplacement lors du retour de la vis 2 en position de parking. Le terme avant indique une position en aval dans un plan transversal à la vis 2 par rapport au sens de déplacement A et le terme arrière une position en amont.

La vis 2 est ainsi susceptible d'être mue en rotation sur elle-même et autour du centre 7, de manière à balayer toute la surface du fond 6 du silo et évacuer par l'ouverture 12 de vidange tous les produits 5 résiduels reposant sur ladite surface.

Le châssis 4 comporte une plaque 14 déflectrice placée le long de la partie 15 arrière de la vis 2, enveloppant celle-ci de son extrémité dans un plan transversal la plus éloignée du fond 6 à son extrémité la plus proche de ce dernier, à savoir sa demi-périphérie située à l'arrière du plan longitudinal central vertical de la vis 2.

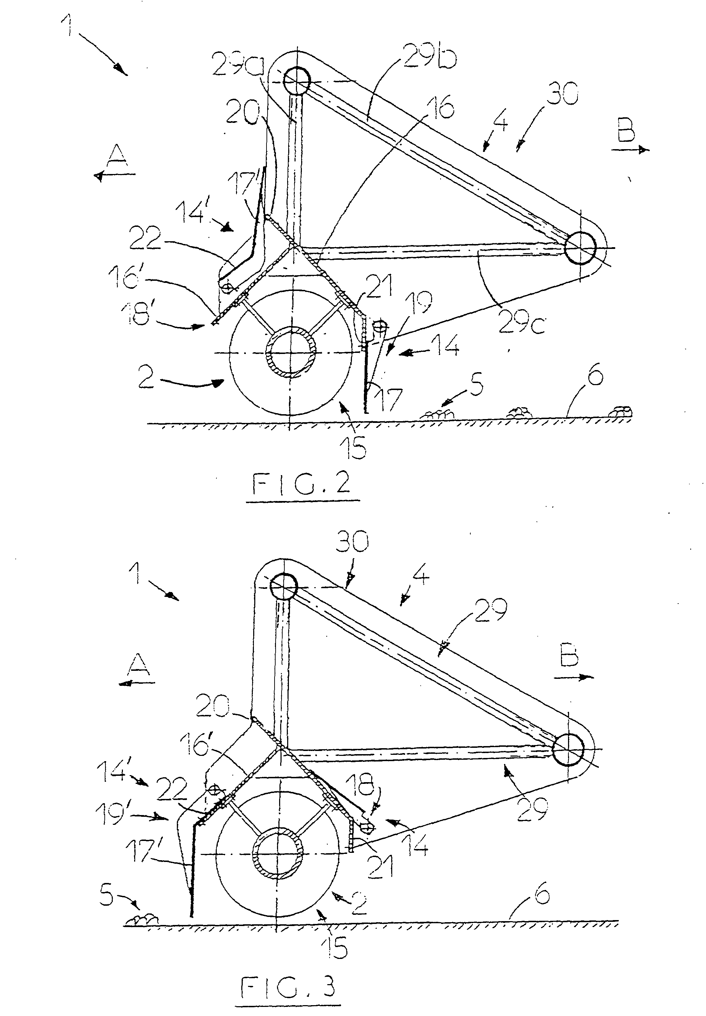

Dans la forme de réalisation représentée sur les figures 2 et 3, la plaque 14 est composée de deux portions 16 et 17 planes formant un V d'angle obtus entourant la partie arrière de la vis 2.

L'extracteur comprend des moyens permettant à la vis 2 d'accéder au moins partiellement aux produits 5 lors de son déplacement dans le sens B.

Selon une forme de réalisation desdits moyens, la plaque 14 déflectrice est escamotable entre une position 18 ouverte dans laquelle une partie ou la totalité de la plaque libère un passage aux produits 5 reposant près de celle-ci vers la vis (figure 3) notamment lors du retour de la vis 2 en position de parking et une position 19 fermée dans laquelle la plaque forme autour de la vis 2 une paroi déflectrice des produits extraits en cours d'utilisation, ladite paroi les guidant vers l'ouverture 12 de vidange.

L'escamotage de la plaque 14 est susceptible d'être réalisé par pivotement de celle-ci autour d'un axe colinéaire à l'axe de la vis 2.

Dans la forme de réalisation selon les figures 2 et 3, la portion 17 est articulée par rapport à la portion 16 et susceptible de pivoter autour d'un axe colinéaire à l'axe de la vis 2 dans un plan transversal à la vis 2. En position 19 fermée de repos, l'extrémité inférieure de la portion 17 est verticale et proche du fond 6 du silo, son extrémité supérieure étant jointe à la portion 16 inclinée. L'extrémité libre supérieure de la portion 16 est disposée à l'aplomb du centre de la vis 2, dans son plan vertical longitudinal central. En position 18 ouverte, la portion 17 est entraînée en rotation vers le haut et maintenue plaquée contre la face externe de la portion 16 fixe.

L'extracteur comprend des moyens de même type ou de type différent que ceux décrits précédemment permettant à la vis 2 d'accéder au moins partiellement aux produits 5 lors de son déplacement dans le sens A.

Selon la forme de réalisation décrite plus haut, une deuxième plaque 14' déflectrice est prévue le long de la partie avant de la vis 2 enveloppant celle-ci de son extrémité dans un plan transversal la plus éloignée du fond 6 à son extrémité la plus proche de ce dernier, à savoir sa demi-périphérie située à l'avant du plan longitudinal central vertical de la vis 2. Les plaques 14 et 14' sont disposées de part et d'autre de la vis 2 et en vis à vis.

Dans la forme de réalisation représentée sur les figures 2 et 3, la deuxième plaque 14' est composée de deux portions 16' et 17' planes formant un V d'angle obtus entourant la partie avant de la vis 2. Les extrémités libres des portions 16 et 16' sont liées de telle sorte que les portions 16 et 16' forment un V chapeautant la vis 2. Dans la forme de réalisation représentée, les portions 16 et 16' forment un angle droit.

La plaque 14' déflectrice est escamotable entre une position 18' ouverte dans laquelle une partie ou la totalité de la plaque libère un passage aux produits 5 reposant près de celle-ci vers la vis (figure 2) en cours d'utilisation, et une position 19' fermée dans laquelle la plaque forme autour de la vis 2 une paroi déflectrice des produits extraits les guidant vers l'ouverture 12 de vidange lors du retour de la vis vers la position de parking.

L'escamotage de la plaque 14' est susceptible d'être réalisé d'une manière similaire de celui de la plaque 14.

Dans la forme de réalisation selon les figures 2 et 3, la portion 17' est articulée par rapport à la portion 16' et susceptible de pivoter autour d'un axe colinéaire à l'axe de la vis 2 dans un plan transversal à la vis 2. En position 19' fermée de repos, l'extrémité inférieure de la portion 16' est verticale et proche du fond 6 du silo, son extrémité supérieure étant jointe à la portion 17' inclinée. L'extrémité libre supérieure de la portion 16' est disposée à l'aplomb de lavis 2, dans son plan vertical longitudinal central. En position ouverte 18', la portion 17' est entraînée en rotation vers le haut et maintenue plaquée contre la face externe de la portion 16' fixe. Les plaques 14 et 14' présentent une structure et un fonctionnement quasi-symétriques par rapport au plan longitudinal vertical central de la vis 2.

Selon une forme de réalisation particulière, la portion 16 fixe est prolongée vers le haut au delà de la liaison entre les portions 16 et 16', de manière à former butée 20 au mouvement de la portion 17' lors de son plaquage contre la portion 16'. Elle est également sensiblement prolongée vers le bas dans une direction verticale, un accès important à la vis 2 n'étant pas nécessaire lors du retour vers la position de parking compte tenu du balayage effectué dans le sens de déplacement A. Dans ce cas, la portion 17 est articulée au châssis 4 de manière qu'elle puisse se déplacer entre une position fermée verticale dans laquelle elle est accolée au prolongement 21 vertical de la plaque 16 et une position ouverte inclinée dans laquelle elle est accolée à la plaque 16.

La portion 17' est prolongée de manière à présenter un prolongement 22 d'inclinaison différente et à former avec ledit prolongement 22 un V d'angle obtus. En position fermée, la portion 17' est vertical et son prolongement 22 de même inclinaison que la portion 16' de manière à se superposer avec elle. La portion 17' est articulée au châssis 4 entre ladite position fermée et la position ouverte dans laquelle la prolongement 22 est parallèle à la partie 16' et la partie 17' vient en butée contre la butée 20.

Le déplacement des plaques 14 et 14' de la position ouverte à la position fermée ou inversement, et plus particulièrement le déplacement des portions 17 et 17', sont actionnées de manière manuelle ou automatique par tout type de moyen connu.

Le châssis 4 est monté sur des moyens de déplacement se présentant sous la forme de roue, galet ou équivalent de type connu.

Dans la forme de réalisation selon les figures 1 à 3, les moyens de déplacement sont constitués d'une roue 23 dentée d'axe radial disposée à l'extrémité 10b périphérique du châssis. Une crémaillère 24, associée à la roue 23, est fixée au fond 6 du silo et définit un parcours circulaire de centre le centre 7 du silo. Le châssis 4 repose sur la roue dentée dont l'actionnement en déplacement le long de la crémaillère 24 est effectué au moyen de l'organe 13 de commande en déplacement motorisé.

Des moyens supplémentaires de déplacement sont susceptibles d'être prévus suivant la longueur de l'extracteur 1 dépendant elle-même de la taille du silo. Ils consistent dans la forme de réalisation représentée, en au moins une paire de galets 25 sur laquelle repose(nt) respectivement au moins une partie intermédiaire du châssis 4, et plus précisément dans le cas de la figure 1c en une paire de galets disposée au milieu radialement du châssis 4 et en amont de ce dernier. Une poutre 26 de support relie la paire de galets 25 amont au châssis 4. Pour des châssis 4 de grande longueur, des paires de galets supplémentaires sont susceptibles d'être réparties de manière régulière sur toute la longueur du châssis. Les paires de galets 25 sont également aptes à être doublées en aval du châssis de manière symétrique par rapport à celui-ci.

Le châssis 4 est susceptible de reposer sur des paires de galets amont et/ou aval intermédiaires en plus du système à crémaillère 24 à l'extrémité périphérique 10b du châssis 2.

L'extracteur 1 comporte des moyens d'attaque des talus résiduels : dans la forme de réalisation représentée sur les figures 1 a et 1 c, les moyens d'attaque sont constitués par un bord 27 dentelé du filet 28 de la vis 2. Le bord 27 dentelé permet à la vis 2 de pénétrer à l'intérieur de la base des talus résiduels, qui de ce fait s'écroulent et s'émiettent.

Le châssis 4, comme le montrent les figures 2 et 3, est composé d'un ensemble de membrures 29a à 29c formant dans un plan transversal à la vis 2, un triangle 30 à angle droit, les côtés formant angle droit étant respectivement horizontal 29c et vertical 29a. La membrure verticale 29a se trouve dans le plan longitudinal vertical central de la vis 2.

L'ensemble des membrures 29 permet d'offrir une structure rigide protégeant les éléments constitutifs de l'extracteur se trouvant en dessous de cet ensemble, des éboulements de matières pris en masse et restées collées contre la paroi 8 périphérique du silo qui peuvent s'en décoller à tout moment.

L'extracteur 1 fonctionne de la manière suivante :

En position de parking, l'extracteur 1 se trouve à l'aplomb du système de démarrage. La portion 17 est en position fermée rabattue autour de la vis 2 et la portion 17' en position ouverte relevée et plaquée contre la portion 16'. Lorsque l'utilisateur souhaite effectuer l'évacuation totale du silo, il actionne le système de démarrage qui déclenche le fonctionnement des organes de commande 11 et 13. La vis 2 entre en rotation sur elle-même et autour du centre 7.

La vis se déplace selon la direction A ; les produits 5 accèdent à la vis 2 compte tenu de la position relevée de la portion 17' et sont entraînés vers l'ouverture 12 de vidange, guidés par la plaque 14 déflectrice. Lorsque la vis rencontre des talus de matières résiduelles de grande taille et fortement pris en masse, le filet 28 dentelé de ladite vis permet d'attaquer la base desdits talus qui s'écroulent et s'émiettent.

Lorsque l'utilisateur souhaite interrompre le fonctionnement de l'extracteur, l'évacuation étant considérée comme totale, il actionne les organes de commande de manière que la vis reparte en sens inverse B vers la position de parking. De manière automatique ou manuelle, la portion 17 est relevée vers sa position ouverte et la portion 17' rabattue vers sa position fermée. De cette manière, les matières résiduelles reposant encore sur le fond et provenant d'éboulement ou de l'écroulement des talus après le passage de la vis 2, sont transportées vers l'ouverture 12 du fait de la position ouverte de la plaque 14, guidées par la plaque 14'.

De retour en position de parking, les plaques 14 et 14' reprennent leur position initiale, à savoir une position fermée pour la plaque 14 et ouverte pour la plaque 14'. L'extracteur est prêt pour démarrer un nouveau cycle de balayage/évacuation.

## Revendications

1. Extracteur destiné à l'évacuation de produits (5) stockés dans un silo (3) ou équivalent, comportant une vis (2) sans fin apte à être entraînée en rotation sur elle-même et associée à deux plaques déflectrices dont l'une au moins est mobile, lesdites plaques guidant les produits (5) extraits vers une ouverture (12) d'évacuation, la vis étant susceptible de se déplacer parallèlement à la surface du fond (6) du silo autour d'un axe vertical selon les deux sens de rotation, **caractérisé en ce que** les deux plaques (14, 14') sont disposées de part et d'autre de la vis et en vis à vis, chaque plaque comportant au moins une portion fixe et une portion mobile formée d'un panneau sensiblement plan et articulé sur la portion fixe autour d'un axe colinéaire à la vis (2), entre une position ouverte libérant un passage aux produits, et une position fermée où la plaque guide lesdits produits vers l'ouverture d'évacuation.

2. Extracteur selon la revendication 1, **caractérisé en ce que** les portions fixes (16, 16') de chaque plaque déflectrice (14, 14') sont situées au-dessus de la vis (2) et forment une surface concave et continue dont la concavité est tournée vers le bas et vers la vis.

3. Extracteur selon la revendication 2, **caractérisé en ce que** ladite surface forme un V renversé à l'aplomb du centre de la vis (2).

4. Extracteur selon l'une des revendications précédentes, **caractérisé en ce que** les deux portions (16, 17 et 16', 17') de chaque plaque (14, 14') forment, en position fermée, un V d'angle obtus, les deux plaques en position fermée entourant de part et d'autre la vis (2).

5. Extracteur selon la revendication 4, **caractérisé en ce que** les portions mobiles (17, 17') sont, en position fermée, sensiblement verticales.

6. Extracteur selon l'une des revendications précédentes, **caractérisé en ce que** la portion mobile (17, 17') de chaque plaque déflectrice vient en appui, en position ouverte, sur la portion fixe respective (16, 16').

7. Extracteur selon l'une des revendications précédentes, **caractérisé en ce qu'**au moins une portion fixe comporte une butée (20) contre laquelle est apte à venir s'appuyer la portion mobile de l'autre plaque lorsqu'elle est en position ouverte.

8. Extracteur selon l'une des revendications 1 à 6, **caractérisé en ce qu'**au moins une portion mobile présente une forme de V d'angle obtus.

9. Extracteur selon l'une des revendications précédentes, **caractérisé en ce qu'**au moins une paire de galets (25) ou équivalent associée(s) à un châssis (4) contenant la vis et répartie(s) de manière homogène sur toute sa longueur, est prévue pour le déplacement de ce dernier.

10. Extracteur selon l'une des revendications précédentes, **caractérisé en ce qu'**il comporte un châssis (4) porteur comprenant des membrures (29) formant une structure triangulaire rigide de protection.

## Patentansprüche

1. Extraktionsvorrichtung zur Entnahme von in einem Silo (3) oder dergleichen gelagerten Produkten (5), mit einer endlosen Schnecke (2), die um sich selbst drehantreibbar ist und zwei Ablenkplatten zugeordnet ist, von denen wenigstens eine beweglich ist, wobei die Platten die extrahierten Produkte (5) zu einer Entnahmeöffnung (12) führen, wobei die Schnecke parallel zur Oberfläche des Bodens (6) des Silos um eine vertikale Achse in beiden Drehrichtungen bewegbar ist, **dadurch gekennzeichnet, dass** die zwei Platten (14, 14') beiderseits der Schnecke und gegenüberliegend angeordnet sind, wobei jede Platte wenigstens einen ortsfesten Abschnitt und einen aus einer im wesentlichen ebenen, an den ortsfesten Abschnitt um eine zur Schnecke (2) kollineare Achse angelenkten Platte gebildeten Abschnitt aufweist, der zwischen einer offenen Position, die einen Durchgang für die Produkte freigibt, und einer geschlossen Position beweglich ist, wo die Platte die Produkte zu der Entnahmeöffnung führt.

2. Extraktionsvorrichtung nach Anspruch 1, **dadurch gekennzeichnet, dass** die ortsfesten Abschnitte (16, 16') jeder Ablenkplatte (14, 14') sich oberhalb der Schnecke (2) befinden und eine konkave, kontinuierliche Fläche bilden, deren konkave Seite nach unten und der Schnecke zugewendet ist.

3. Extraktionsvorrichtung nach Anspruch 2, **dadurch gekennzeichnet, dass** die Oberfläche ein umgekehrtes V oberhalb des Mittelpunkts der Schnecke (2) bildet.

4. Extraktionsvorrichtung nach einem der vorhergehenden Ansprüche, **dadurch gekennzeichnet, dass** die zwei Abschnitte (16, 17 und 16', 17') jeder Platte (14, 14') in geschlossener Position ein stumpfwinkliges V bilden, wobei die zwei Platten in geschlossener Position die Schnecke (2) beiderseits umgeben.

5. Extraktionsvorrichtung nach Anspruch 4, **dadurch gekennzeichnet, dass** die beweglichen Abschnitte (17, 17') in geschlossener Position im wesentlichen vertikal sind.

6. Extraktionsvorrichtung nach einem beliebigen der vorherigen Ansprüche, **dadurch gekennzeichnet, dass** der bewegliche Abschnitt (17, 17') jeder Ablenkplatte in offener Position auf dem jeweiligen ortsfesten Abschnitt (16, 16') abgestützt ist.

7. Extraktionsvorrichtung nach einem der vorhergehenden Ansprüche, **dadurch gekennzeichnet, dass** wenigstens ein ortsfester Abschnitt einen Anschlag (20) aufweist, an dem der bewegliche Abschnitt der anderen Platte in der Lage ist, sich abzustützen, wenn er in offener Position ist.

8. Extraktionsvorrichtung nach einem der Ansprüche 1 bis 6, **dadurch gekennzeichnet, dass** wenigstens ein beweglicher Abschnitt die Form eines stumpfwinkligen V aufweist.

9. Extraktionsvorrichtung nach einem der vorhergehenden Ansprüche, **dadurch gekennzeichnet, dass** wenigstens ein Paar Rollen (25) oder dergleichen, die einem die Schnecke enthaltenden Rahmen (4) zugeordnet ist/sind und gleichförmig über dessen gesamte Länge verteilt ist/sind, zur Bewegung des letzteren vorgesehen ist.

10. Extraktionsvorrichtung nach einem der vorhergehenden Ansprüche, **dadurch gekennzeichnet, dass** es einen tragenden Rahmen (4) mit Trägern (29) umfasst, die eine steife dreieckige Schutzstruktur bilden.

## Claims

1. Extractor intended for the evacuation of products (5) stored in a silo (3) or equivalent, comprising an endless screw (2) adapted to be driven in rotation on itself and associated with two deflector plates of which at least one is mobile, said plates guiding the extracted products (5) towards an opening (12) for evacuation, the screw being capable of moving parallel to the surface of the bottom (6) of the silo about a vertical axis in the two directions of rotation, **characterized in that** the two plates (14, 14') are disposed on either side of the screw and opposite each other, each plate comprising at least one fixed portion and one mobile portion formed by a substantially planar panel articulated on the fixed portion about an axis colinear to the screw (2), between an open position clearing a passage for the products, and a closed position where the plate guides said products towards the evacuation opening.

2. Extractor according to Claim 1, **characterized in that** the fixed portions (16, 16') of each deflector plate (14, 14') are located above the screw (2) and form a continuous, concave surface whose concavity faces downwardly and towards the screw.

3. Extractor according to Claim 2, **characterized in that** said surface forms an upturned V plumb with the centre of the screw (2).

4. Extractor according to one of the preceding Claims, **characterized in that** the two portions (16, 17 and 16', 17') of each plate (14, 14') form, in closed position, a V with obtuse angle, the two plates in closed position surrounding the screw (2) on either side.

5. Extractor according to Claim 4, **characterized in that** the mobile portions (17, 17') are, in closed position, substantially vertical.

6. Extractor according to one of the preceding Claims, **characterized in that** the mobile portion (17, 17') of each deflector plate comes into abutment, in open position, on the respective fixed portion (16, 16').

7. Extractor according to one of the preceding Claims, **characterized in that** at least one fixed portion comprises a stop (20) against which the mobile portion of the other plate is adapted to abut when it is in open position.

8. Extractor according to one of Claims 1 to 6, **characterized in that** at least one mobile portion presents the form of a V with obtuse angle.

9. Extractor according to one of the preceding Claims, **characterized in that** at least one pair of rollers (25) or equivalent associated with a chassis (4) containing the screw and distributed homogeneously over the whole of its length, is provided for the displacement of the latter.

10. Extractor according to one of the preceding Claims, **characterized in that** it comprises a bearing chassis (4) comprising booms (29) forming a rigid triangular structure for protection.
